# EUROPÄISCHE PATENTSCHRIFT

(11) **EP 1 273 541 B1**
(45) Veröffentlichungstag und Bekanntmachung des Hinweises auf die Patenterteilung: **16.05.2007**
(21) Anmeldenummer: 02003009.4
(22) Anmeldetag: 12.02.2002
(51) Int. Cl.: B65H 19/30

(54) **Einrichtung zur Versorgung von Verpackungsmaschinen mit Verpackungsmaterial**
Device for providing packaging machines with packaging material
Dispositif d'alimentation de machines d'emballage en matériau d'emballage

(30) Priorität: 27.02.2001 DE 10109446; 25.10.2001 DE 10152048
(43) Veröffentlichungstag der Anmeldung: 08.01.2003
(73) Patentinhaber: Focke & Co. (GmbH & Co. KG), 27283 Verden (DE)
(72) Erfinder: Focke, Heinz, 27283 Verden (DE); Steinkamp, Irmin, 21217 Seevetal (DE); Hill, Frank, 28832 Achim (DE); Pfeiffer, Holger, 27339 Riede/Felde (DE)
(74) Vertreter: Bolte, Erich

(56) Entgegenhaltungen:
- EP-A- 0 570 871
- EP-A- 0 710 614
- DE-A- 3 915 139
- DE-A- 4 041 865
- DE-A- 4 141 216
- US-A- 5 209 247

## Beschreibung

Die Erfindung betrifft eine Einrichtung zur Versorgung von Fertigungs- und Verpackungsmaschinen mit Verbrauchsmaterial oder Verpackungsmaterial, insbesondere als Bobinen gewickelten Materialbahnen, die auf Paletten durch einen Palettenförderer angeliefert, in einem Zwischenlager abgesetzt und auf die Fertigungs- und Verpackungsmaschinen verteilt werden.

Es ist bekannt, im Bereich einer Produktionsmaschine ein maschinenseitiges Materiallager einzurichten, und zwar mit einer Palette als Träger für zu verarbeitende Bobinen (EP 0 710 614). Die einzelnen Bobinen werden nach Bedarf der Palette durch einen maschinenseitigen Förderer entnommen und der Verbrauchsstelle an der Maschine zugeführt.

Auch ist ein Managementsystem für Verbrauchs- bzw. Verpackungsmaterial für die Herstellung und Verpackung von Zigaretten bekannt (US 5 209 247). Eine Mehrzahl von Paletten mit Bobinen oder Zuschnittstapeln findet Aufnahme im Bereich eines Zwischenlagers. Die hinsichtlich des Materials sortenrein beladenen Paletten werden dem Zwischenlager durch ein Flurfördergerät zugeführt, nämlich durch einen führerlosen Gabelstapler. Dieser muss auf vorbereiteten, freizuhaltenden Fahrwegen das Material bzw. die Paletten transportieren. Dieses System wird als nächstliegender Stand der Technik angesehen.

Der Erfindung liegt die Aufgabe zugrunde, eine Einrichtung für die Versorgung von Fertigungs- und Verpackungsmaschinen mit Material vorzuschlagen, bei der eine bessere Nutzung der Betriebsflächen und ein zuverlässiges Handhaben der Paletten sowie des Materials gewährleistet sind.

Die Lösung dieser Aufgabe erfolgt durch die kennzeinchnenden Merkmale des Anspruch 1.

Weitere Einzelheiten der Erfindung werden nachfolgend anhand eines Ausführungsbeispiels einer Anlage für die Herstellung und Verpackung von Zigaretten näher erläutert. Es zeigt:
- Fig. 1: eine Maschineneinheit mit Zwischenlager in schematischem Grundriss,
- Fig. 2: ein Zwischenlager als Teil der Einrichtung gemäß Fig. 1 in vergrößertem Maßstab,
- Fig. 3: das Zwischenlager in einer Seitenansicht gemäß Pfeil III in Fig. 2,
- Fig. 4: einen Querschnitt bzw. eine Queransicht des Zwischenlagers in einer Ebene IV-IV der Fig. 2,
- Fig. 5: einen Querschnitt des Zwischenlagers mit einem Palettenförderer zugekehrten Bereich in der Schnittebene V-V,
- Fig. 6: eine Darstellung bzw. Ansicht ähnlich Fig. 5, mit Ansicht eines Bobinenförderers,
- Fig. 7: eine Einzelheit eines Überkopfförderers, nämlich des Bobinenförderers, in Seitenansicht,
- Fig. 8: ein Detail des (Zwischen-)Lagers für Bobinen, nämlich ein Zwischenförderer, in Seitensicht,
- Fig. 9: eine Einzelheit im Bereich einer Verpackungsmaschine mit Bobinenförderer in Queransicht gemäß Schnittebene IX-IX in Fig. 1,
- Fig. 10: eine Darstellung analog Fig. 9 nach Ablage einer Bobine durch den Bobinenförderer.

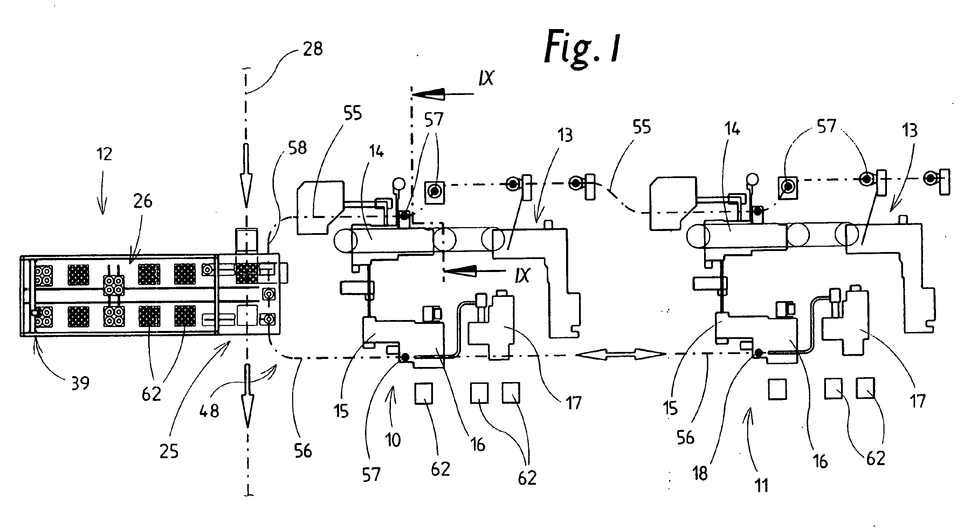

Die Zeichnungen befassen sich mit der Herstellung und Verpackung von Zigaretten. Eine in Fig. 1 schematisch gezeigte Einrichtung bzw. Einheit besteht aus mehreren Maschinengruppen, nämlich aus zwei Linien 10, 11, die einem gemeinsamen Vorrat bzw. Zwischenlager 12 für Fertigungs- und Verpackungsmaterial zugeordnet sind. Eine Linie 10, 11 wiederum besteht aus einer Zigarettenherstellmaschine, also einem Maker 13, und aus einer Verpackungsmaschine für Zigarettenpackungen, also einem Packer 14, weiterhin aus einer Verpackungsmaschine für die Außenumhüllung von Zigarettenpackungen, nämlich einem Cellopacker 15 in Verbindung mit einem Gebindepacker - Stangenpacker 16 - sowie einem hieran anschließenden Kartonpacker 17.

Das Zwischenlager 12 enthält das für die (zwei) Linien 10, 11 benötigte Verpackungsmaterial, und zwar soweit es sich dabei um gewickeltes, bahnförmiges Material handelt, welches in Form von Bobinen 18 vorliegt. Die Bobinen 18 weisen eine Mittenöffnung 19 auf, die üblicherweise von einem zylindrischen Bobinenkem gebildet wird. Im Durchmesser und in der axialen Länge sind die Bobinen 18 unterschiedlich, nämlich je nach Material.

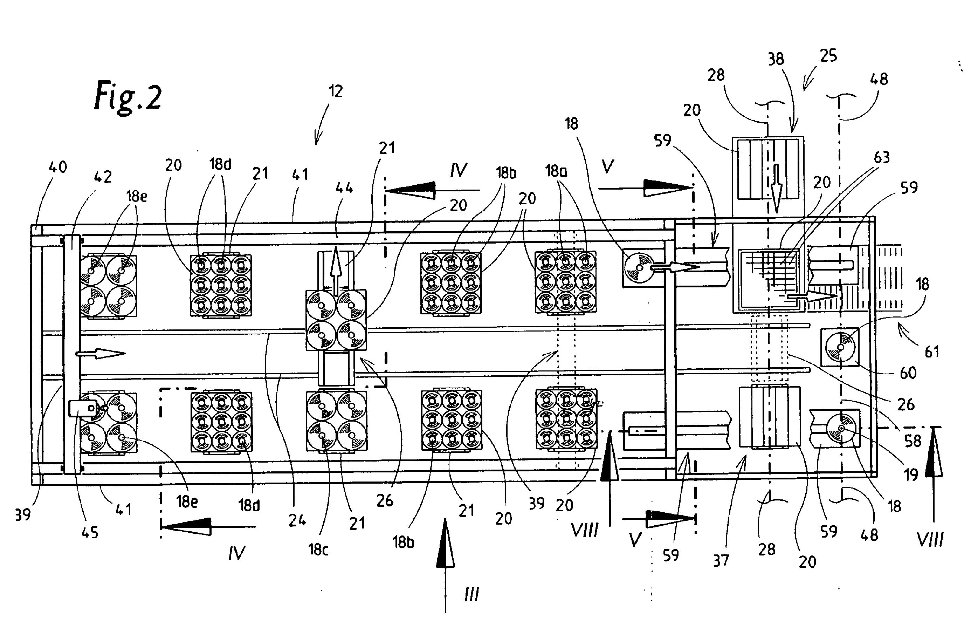

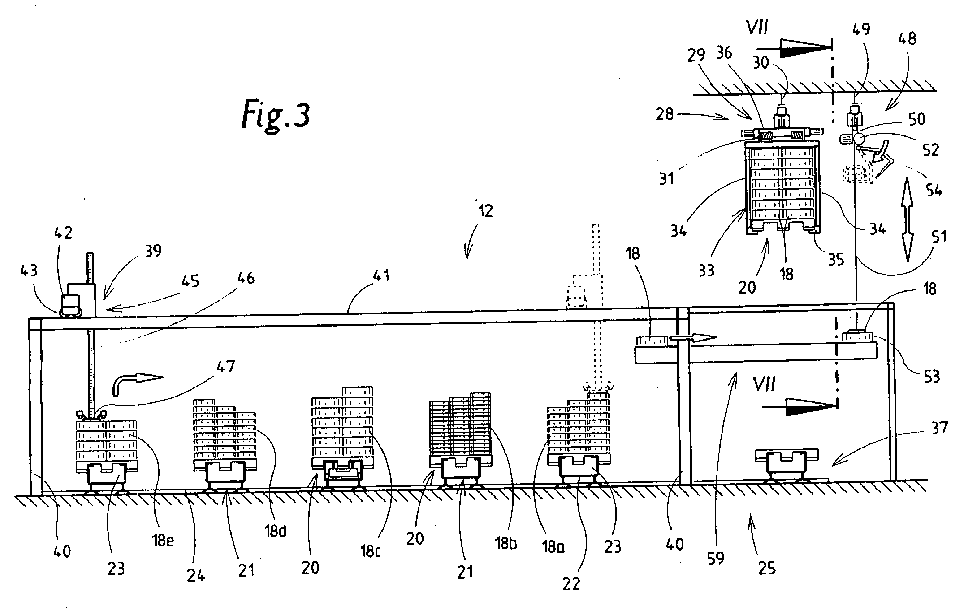

Das Zwischenlager 12 ist als langgestrecktes, rechteckiges Areal ausgebildet. Die Bobinen 18 sind sortiert in Gruppen gelagert, und zwar auf Paletten 20. Jede Palette 20 nimmt ausschließlich Verpackungsmaterial einer Art bzw. Sorte auf, in mehreren Lagen übereinander, derart, dass mindestens eine Palette jeder Sorte Verpackungsmaterial im Zwischenlager 12 vorhanden ist. Mit diesen Paletten 20 werden die Bobinen 18 innerhalb des Zwischenlagers 12 in exakt vorgegebenen Positionen abgesetzt. Zu diesem Zweck sind auf dem Boden abgestützte Tragvorrichtungen, nämlich Ablagen 21 für je eine Palette 20 vorgesehen. Bei dem Ausführungsbeispiel gemäß Fig. 2 sind zehn Ablagen 21 in zwei Reihen, zu je fünf Ablagen 21 eingerichtet. Diese bestehen aus einer Bodenwand 22 mit Stützorganen an der Unterseite. An zwei einander gegenüberliegenden Seiten der Bodenwand 22 - quer zur Längserstreckung des Zwischenlagers 12 - sind (zwei) im Querschnitt U-förmig ausgebildete Stege 23 angebracht. Diese bilden die Abstützung für die auf den Ablagen 21 ruhenden Paletten 20, wobei aufgrund der Abmessungen der Ablagen 21 die Paletten mit den üblichen seitlichen Profilbalken die Ablage 21 umgreifen (Fig. 3).

Im Zwischenlager 12 sind die Verarbeitungs- und Verpackungsmaterialien so positioniert, dass Cellobobinen 18a für Außenumhüllungen der Packungen auf zwei ersten Paletten 20 positioniert sind. Benachbart hierzu sind Stanniolbobinen 18b für die Innenumhüllung einer Zigarettenpackung, auf den nächstfolgenden Paletten 20 Kragenbobinen 18c für die Herstellung von Kragen als Teil einer Zigarettenpackung des Typs Klappschachtel, sodann Filterpapierbobinen 18d und Zigarettenpapierbobinen 18e auf jeweils zwei Paletten 20 gelagert. Die beiden letztgenannten Materialien, nämlich Filterpapier und Zigarettenpapier, werden für die Herstellung der Zigaretten im Bereich des Makers 13 eingesetzt.

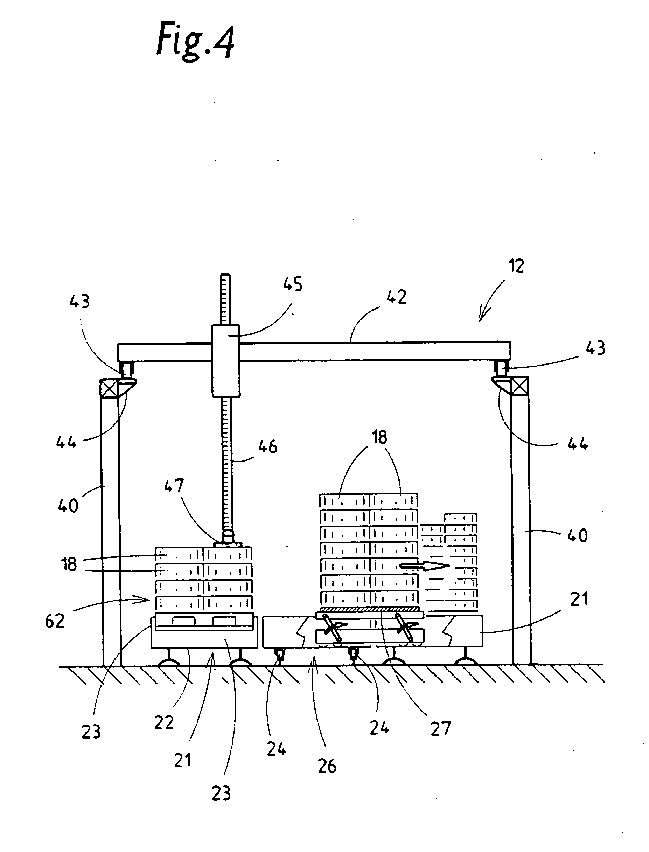

Die paarweise dem Material zugeordneten Paletten 20 bzw. Ablagen 21 sind zu beiden Seiten einer innerhalb des Zwischenlagers 12 (mittig) gebildeten Förderbahn für Paletten 20 angeordnet. Diese Bahn besteht aus zwei bodenseitigen Schienen 24. Auf diesen ist ein Transportfahrzeug für Paletten 20 über die volle Länge des Zwischenlagers 12 verfahrbar bis in den Bereich einer Umschlagstation 25, in der Paletten 20 und Bobinen 18 angeliefert und abgefördert werden. Das Fahrzeug ist ein Palettenwagen 26, der auf den Schienen 24 verfahren wird. Der Palettenwagen 26 nimmt (beladene) Paletten im Bereich der Umschlagstation 25 auf, fährt diese bis in den Bereich einer leeren Ablage 21 und setzt die betreffende Palette 20 auf dieser Ablage 21 ab. Zu diesem Zweck ist der Palettenwagen 26 mit einer Querfördervorrichtung ausgerüstet. Es handelt sich dabei um zwei Hubschienen 27, die innerhalb des Profils des Palettenwagens 26 in einer Ausgangsstellung ruhen und die zum Anheben der Palette 20 aufwärtsbewegbar sind, im vorliegenden Falle durch Parallelogrammstützen (Fig. 4). Die Hubschienen 27 sind weiterhin an einem Fahrwerk angebracht, das in Querrichtung auf dem Palettenwagen 26 verfahrbar ist und in die mit einem entsprechenden Profil ausgebildete Ablage 21 eingefahren werden kann. In der Endstellung befindet sich dieses Hubfahrwerk im Bereich der Ablage 21. Durch Absenken der Hubschienen 27 wird die Palette positionsgenau auf der betreffenden Ablage 21 abgesetzt. Das Hubwerk wird sodann in den Palettenwagen 26 zurückgefahren.

Im Bereich der Umschlagstation 25 werden beladene Paletten 20 - je nach Bedarf innerhalb des Zwischenlagers 12 - angeliefert, auf den Palettenwagen 26 umgeladen und an der zugeordneten Position im Bereich des Zwischenlagers 12 abgesetzt. Des Weiteren werden entleerte Paletten 20 abgefördert. Für den Transport der Paletten 20 ist ein Palettenförderer 28 vorgesehen, der als Überkopfförderer ausgebildet ist und quer zur Ausrichtung des Zwischenlagers 12 durch die Umschlagstation 25 hindurchführt. Der Palettenförderer 28 transportiert beladene Paletten 20 aus einem Zentrallager (nicht gezeigt) zum Zwischenlager 12 bzw. zur Umschlagstation 25. Leere Paletten 20 werden durch den Palettenförderer 28 zum Zentrallager zurücktransportiert.

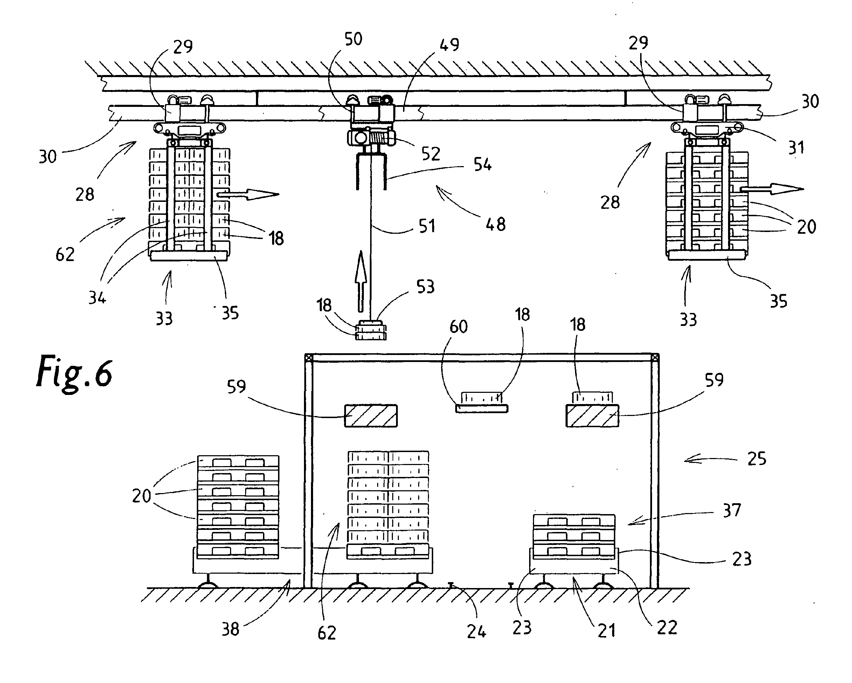

Der Palettenförderer 28 besteht aus vorzugsweise mehreren Laufwagen 29, die an einer hochliegenden Laufschiene 30 verfahrbar sind. Die Laufschiene 30 ist, wo konstruktiv möglich, als Deckenschiene montiert. Der Palettenförderer 28 kann im Prinzip in herkömmlicher Weise ausgebildet sein als Elektrohängebahn. An dem Laufwagen 29 ist ein Hubwerk 31 angebracht mit Zugorganen, insbesondere Zugseilen 32. An diesen ist eine Halterung 33 für die Aufnahme einer Palette 20 angebracht. Die Halterung 33 besteht hier aus zwei aufrechten Tragstreben 34 mit unteren Tragstücken, nämlich Tragschenkeln 35, die eine Palette 20 randseitig unten erfassen, und zwar im Bereich von durchgehenden Tragteilen der Palette 20. Die Halterung 33 ist mit den beiden Zugseilen 32 verbunden. Diese wiederum werden durch Huborgane, nämlich Winden 36, auf- und abbewegt. Die Halterung 33 ist so ausgebildet, dass eine mit einer Mehrzahl von Bobinen beladene Palette 20 Aufnahme findet oder alternativ ein Stapel entleerter Paletten 20 (Fig. 6, rechts).

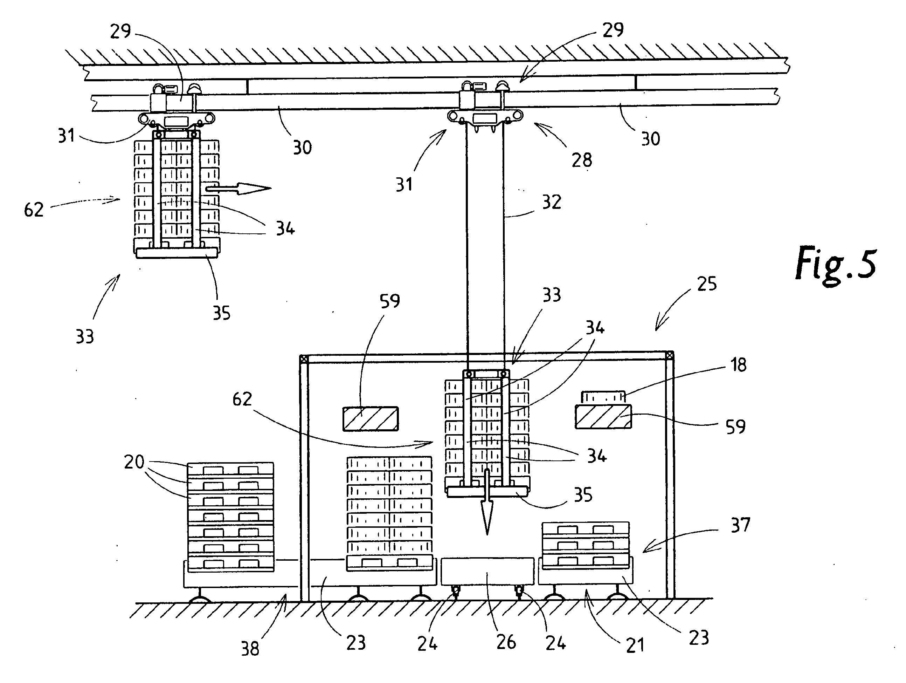

Eine (neue) beladene Palette 20 wird von dem Palettenförderer 28 einem exakt unterhalb des Palettenförderers 28 positionierten Palettenwagen 26 abgesetzt (Fig. 5). Die Halterung 33 wird durch Auseinanderbewegen der Tragschenkel 35 von der Palette 20 gelöst und aufwärtsbewegt. Die Palette 20 wird nun durch den Palettenwagen 26 der vorgesehenen (leeren) Position zugeführt.

Leere Paletten 20 werden gesammelt, nämlich gestapelt und bei entsprechender Anzahl abgefördert. Im Bereich der Umschlagstation 25 ist neben der Bewegungsbahn des Palettenwagens 26 ein Zwischenspeicher 37 für leere Paletten 20 eingerichtet. Es handelt sich dabei um eine der beschriebenen Ablagen 21 für Paletten 20.

Der Transport einzelner Bobinen 18 zu den Maschinen und Aggregaten der Linien 10, 11 erfolgt durch separate Förderer. Im Bereich des Zwischenlagers 12 ist ein automatischer Bobinenförderer, nämlich ein Portalroboter 39 vorgesehen, der einzelne, ggf. mehrere, Bobinen 18 von den Paletten 20 nach Bedarf übernimmt und zur Übernahme durch einen Bobinenförderer positioniert bzw. in den Bereich der Umschlagstation 25 fördert. Für den Portalroboter 39 ist das Zwischenlager 12 innerhalb eines Tragwerks angeordnet, welches aus (vier) aufrechten Stützen 40 und zwei seitlichen Trägern 41 besteht. Letztere dienen zugleich als Tragmittel für den Portalroboter 39. Eine Traverse 42 erstreckt sich quer oberhalb des Zwischenlagers 12 und ist in Längsrichtung desselben mit dem Portalroboter 39 verfahrbar. Die Traverse ist mit Rollen 43 auf den Trägern 41 bzw. auf Konsolen 44 verfahrbar. Eine Hubeinheit 45 ist wiederum in Längsrichtung der Traverse 42, also in Querrichtung des Zwischenlagers 12 verfahrbar, so dass durch die Bewegbarkeit der Traverse 42 einerseits und die Querbewegbarkeit der Hubeinheit 45 an der Traverse 42 jeder Bereich des Zwischenlagers 12 erfasst werden kann.

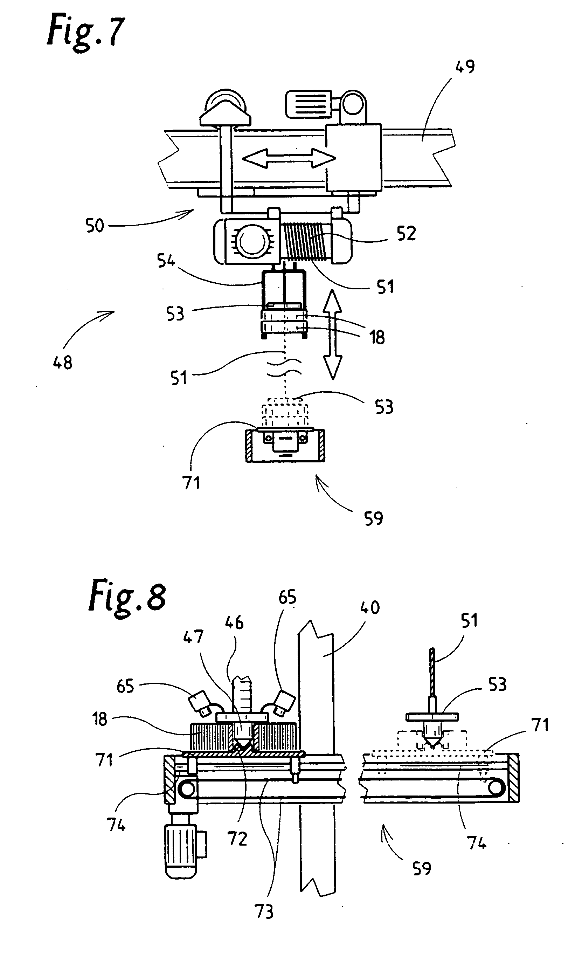

An der Hubeinheit 45 ist ein auf- und abbewegbares Hubmittel angebracht, im vorliegenden Falle eine Zahnstange 46. Am unteren Ende derselben befindet sich ein Hubkopf 47. Dieser ist mit einer Einrichtung zum Erfassen einer Bobine 18 ausgebildet, insbesondere mit einem Tragzapfen, der in die Mittenöffnung 19 eintritt und dort verankert wird. Der Portalroboter 39 und insbesondere der Hubkopf 47 ist auf automatische Arbeitsweise eingerichtet, derart, dass nach Bedarf die abgerufenen Bobinen auf den Paletten erkannt, erfasst und zum Weitertransport gebracht werden. Der Hubkopf 47 weist zu diesem Zweck Sensoren auf zum Abtasten von Identifikationsmerkmalen der Bobinen 18 und zum Einführen des Tragzapfens in die Mittenöffnung 19. Bei dem vorliegenden Beispiel (Fig. 8) sind am Hubkopf 47 (zwei) einander gegenüberliegende Lasertaster 65 angeordnet, die die Steuerung bzw. Führung des Portalroboters 39 sowie des Hubkopfes 47 über eine zentrale Steuereinheit bewirken.

Entsprechend dem Bedarf wird der Portalroboter 39 zu einer Palette 20 mit dem angeforderten Verpackungsmaterial gesteuert und eine Bobine 18 auf dieser Palette 20 von dem Hubkopf 47 erfasst. Durch Aufwärtsfahren der Zahnstange 46 wird die Bobine 18 angehoben und durch Verfahren der Traverse 42 sodann in den Bereich der Umschlagstation 25 gefördert.

Für den Transport der Bobine zur Linie 10, 11 ist ein gesonderter Förderer vorgesehen, nämlich ein einfacher Bobinenförderer 48. Dieser ist als Überkopfförderer ausgebildet mit einer erhöht bzw. an einer Decke angeordneten Laufschiene 49. An dieser ist ein Laufwerk 50 verfahrbar, welches mit einem Hubwerk für ein Zugorgan, nämlich für ein Hubseil 51, bestückt ist. Das Hubwerk besteht hier aus einer Winde 52.

Am Huborgan, nämlich am Hubseil 51, ist ein Bobinenträger 53 angebracht. Dieser erfasst eine Bobine 18 (oder mehrere übereinander angeordnete Bobinen) durch Eintritt eines Halteorgans, nämlich eines Tragzapfens, in die Mittenöffnung 19. Beim Transport entlang der Laufschiene 49 wird die Bobine 18 am Bobinenträger 53 durch ein zusätzliches Organ fixiert, nämlich durch einen schwenkbar am Laufwerk 50 angebrachten Sicherungshebel 54, der mit einem unteren, horizontalen Schenkel an der Unterseite der Bobine 18 anliegt.

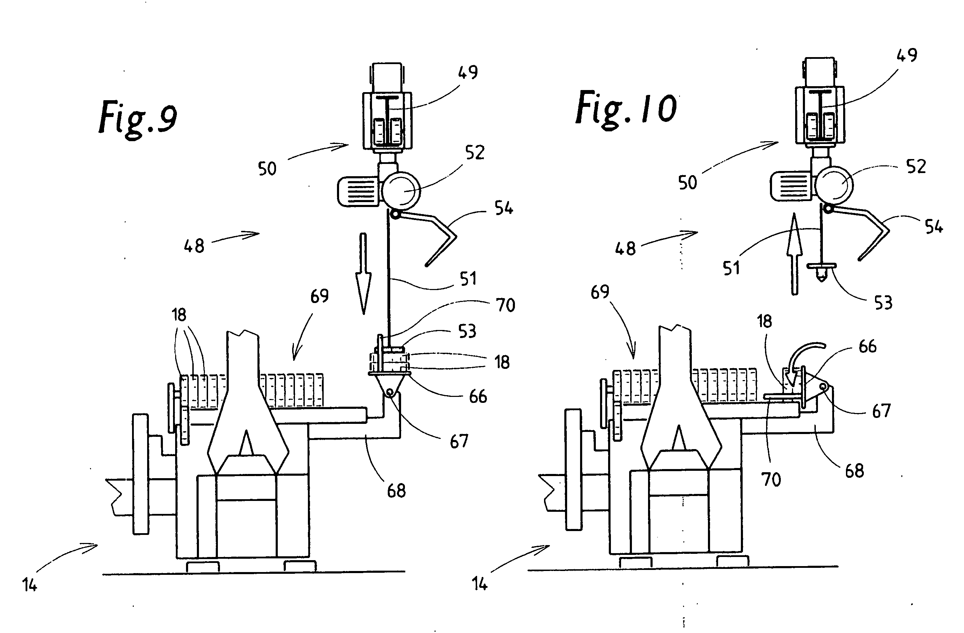

Der Bobinenförderer 48 ist bei dem vorliegenden Ausführungsbeispiel als endlicher Förderer ausgebildet. Zwei Förderabschnitte 55, 56 erstrecken sich zu beiden Seiten der Linien 10, 11 oberhalb derselben, und zwar in einer Position oberhalb von vorgegebenen Ablageplätzen 57 für die Bobinen 18. Die Ablageplätze 57 sind so gewählt, dass entweder die Bobinen 18 unmittelbar von einem Aggregat der Maschinen übernommen oder von einem maschinenseitigen Bobinenförderer zum betreffenden Aggregat transportiert werden können. Bei dem Beispiel in Fig. 9 und Fig. 10 ist an einer Maschine - Packer 14 - eine Absetzplatte 66 angebracht, und zwar als exakter Ablageplatz für die Bobine 18. Die in der Ausgangsstellung horizontal ausgerichtete Absetzplatte 66 ist kippbar über ein Lager 67 an einem winkelförmigen Tragarm 68. Durch Kippen gelangt die Bobine 18 in eine aufrechte Position - mit horizontaler Mittenöffnung 19. In dieser Stellung wird die Bobine 18 einem maschinenseitigen Bobinenmagazin 69 zugeführt. Die Absetzplatte 66 weist Halteorgane auf, nämlich mindestens zwei aufrechte Tragstangen 70. Diese stützen die Bobine 18 bei der Kippbewegung am Umfang ab.

Der Bobinenförderer 48 bzw. die Laufwerke 50 werden in beiden Richtungen der Förderabschnitte 55, 56 verfahren, also in Förderrichtung und Rückkehrrichtung. Im Bereich der Umschlagstation 25 sind die Förderabschnitte 55, 56 durch einen Querabschnitt 58 miteinander verbunden. Dieser verläuft parallel zum Palettenförderer 28.

Die Handhabung der Bobinen 18 für die Übernahme durch den Bobinenförderer 48 ist in besonderer Weise geregelt. Die Bobinen 18 werden nämlich vom Portalroboter 39 auf einem Zwischenförderer 59 abgelegt, der oberhalb der Bewegungsbahnen von Paletten 20 innerhalb des Zwischenlagers 12, also deutlich erhöht, angebracht ist. Bei dem gezeigten Beispiel sind zwei parallele Zwischenförderer 59 vorgesehen, die sich mit einem Aufnahmeende bis in den Bereich des Zwischenlagers 12 erstrecken, jedenfalls bis in den Arbeitsbereich des Portalroboters 39. Dieser legt eine aufgenommene Bobine 18 auf dem zugekehrten Ende des einen oder anderen Zwischenförderers 59 ab. Die betreffende Bobine 18 wird bis in den Bereich einer Übernahmeposition (Fig. 3, rechts) innerhalb der Umschlagstation 25 transportiert, und zwar exakt unterhalb der Bewegungsbahn des Bobinenförderers 48 bzw. im Bereich des Querabschnitts 58. Durch Absenken des Hubkopfes 47 kann die bereitgehaltene Bobine 18 erfasst werden (Fig. 3).

In besonderer Weise ist der bzw. sind die Zwischenförderer 59 ausgebildet, um insbesondere eine exakte Positionierung der Bobinen 18 für den Bobinenförderer 48 zu gewährleisten. Wie aus Fig. 6 ersichtlich, ist der Zwischenförderer 59 mit einer Aufnahme für die Bobine 18 versehen, nämlich mit einer Tragplatte 71. Diese weist einen mittig angeordneten, nach oben weisenden Vorsprung 72 auf, der von unten in die Mittenöffnung 19 der abgelegten Bobine 18 eintritt. Die Bobine 18 ist so exakt aufgrund selbstzentrierender Wirkung auf der Tragplatte 71 positioniert.

Die Tragplatte 71 ist als Transportorgan für die Bobine 18 auf dem Zwischenförderer 59 hin- und herverschiebbar, nämlich aus einer in Fig. 2 links gezeigten Aufnahmeposition in eine rechts dargestellte Übergabestellung. Für die lineare Bewegung der Tragplatte 71 ist ein Antrieb vorgesehen, nämlich ein Gurt bzw. Zahnriemen 73, mit dem die Tragplatte 71 verbunden ist. Mit (Gleit-)Lagem ist die Tragplatte 71 auf Führungen gelagert, nämlich auf zwei parallelen Führungsstangen 74. Fig. 8 zeigt in ausgezogenen Linien die Aufnahmeposition für Bobinen 18 und in gestrichelten Linien die exakte Übergabeposition im Arbeitsbereich des Bobinenförderers 48.

Zwischen den beiden Zwischenförderern 59, nämlich in Verlängerung der Schienen 24, befindet sich eine feststehende Bobinenplattform 60. Diese dient zur Aufnahme von Bobinen 18, die beispielsweise wegen kurzzeitiger Maschinenstörung durch den Bobinenförderer 48 nicht an das zugeordnete Aggregat abgegeben werden können und deshalb zwischengelagert werden müssen. Die Bobinenplattform 60 befindet sich in der Ebene des Querabschnitts 58, so dass jederzeit die betreffende Bobine 18 wieder aufgenommen werden kann von dem Bobinenförderer 48.

Für die Fertigung von (Zigaretten-)Packungen kann zusätzliches bzw. anderweitiges Material verwendet werden, welches nicht als Bobine gelagert werden kann oder für das eine Bereitstellung im Zwischenlager 12 nicht sinnvoll ist. Insbesondere handelt es sich dabei um Stapel von anderweitig vorgefertigten Packungszuschnitten (aus dünnem Karton). Diese werden ebenfalls auf Paletten 20 angeliefert. Im Bereich der Umschlagstation 25 ist eine Einrichtung zum Handhaben dieser besonderen Paletten 20 vorgesehen, so dass diese direkt durch einen eigenständigen Förderer zum Einsatzort transportiert werden können, insbesondere durch einen Gabelstapler. Fig. 2 zeigt als Beispiel im Bereich der Umschlagstation 25 eine Palette 20 mit Zuschnitten 63. Diese Sonderart von Paletten 20 wird ebenfalls durch den Palettenförderer 28 angeliefert und, wie jede Palette 20, auf dem Palettenwagen 26 abgesetzt. Dieser übergibt die (Sonder-)Palette 20 an eine Palettenplattform 38, die teilweise innerhalb der Umschlagstation 25, teilweise außerhalb derselben liegt. Die betreffende Palette mit den Zuschnitten 63 wird zur Weiterverarbeitung von der Palettenplattform 38 abgeschoben auf eine Palettenbahn 61, beispielsweise eine Rollenbahn. Von dieser wird die betreffende Palette 20 durch den Gabelstapler abgenommen und dem Einsatzort zugeführt.

Leere Paletten werden von demselben Förderer (Gabelstapler) auf der Palettenplattform 38 abgesetzt, und zwar außerhalb der Umschlagstation 25 (Fig. 2). Die Leerpaletten werden unter Bildung eines Stapels gesammelt. Dieser wird dann auf der Palettenplattform 38 in Richtung des Pfeils in die Position innerhalb der Umschlagstation 25 verschoben, von dort auf den bereitgehaltenen Palettenwagen 26 gegeben. Der Palettenförderer 28 kann den Stapel an Leerpaletten vom Palettenwagen 26 übernehmen und abtransportieren. Gleiches gilt analog für im Bereich des Zwischenspeichers 37 gesammelte leere Paletten 20.

Die beschriebene und in der Gesamtheit in Fig. 1 gezeigte Einrichtung kann vorteilhafterweise in eine Fabrikationsanlage integriert werden, und zwar derart, dass eine Mehrzahl von Einheiten aus Linien 10, 11 einerseits und einem Zwischenlager 12 andererseits nebeneinander angeordnet sind, wobei eine Besonderheit darin besteht, dass der Palettenförderer 28 sämtliche Einheiten versorgt. Das günstigste Layout sieht dabei so aus, dass abwechselnd die Linien 10, 11 auf der einen oder anderen Seite des Palettenförderers 28 gebildet und das Zwischenlager 12 jeweils auf der gegenüberliegenden Seite untergebracht ist.

### Bezugszeichenliste:

- 10: Linie
- 11: Linie
- 12: Zwischenlager
- 13: Maker
- 14: Packer
- 15: Cellopacker
- 16: Stangenpacker
- 17: Kartonpacker
- 18: Bobine
- 18a: Cellobobine
- 18b: Stanniolbobine
- 18c: Kragenbobine
- 18d: Filterpapierbobine
- 18e: Zigarettenpapierbobine
- 19: Mittenöffnung
- 20: Palette
- 21: Ablage
- 22: Bodenwand
- 23: Steg
- 24: Schiene
- 25: Umschlagstation
- 26: Palettenwagen
- 27: Hubschiene
- 28: Palettenförderer
- 29: Laufwagen
- 30: Laufschiene
- 31: Hubwerk
- 32: Zugseil
- 33: Halterung
- 34: Tragstrebe
- 35: Tragschenkel
- 36: Winde
- 37: Zwischenspeicher
- 38: Palettenplattform
- 39: Portalroboter
- 40: Stütze
- 41: Träger
- 42: Traverse
- 43: Rolle
- 44: Konsole
- 45: Hubeinheit
- 46: Zahnstange
- 47: Hubkopf
- 48: Bobinenförderer
- 49: Laufschiene
- 50: Laufwerk
- 51: Hubseil
- 52: Winde
- 53: Bobinenträger
- 54: Sicherungshebel
- 55: Förderabschnitt
- 56: Förderabschnitt
- 57: Ablageplatz
- 58: Querabschnitt
- 59: Zwischenförderer
- 60: Bobinenplattform
- 61: Palettenbahn
- 62: Materialpalette
- 63: Zuschnitt
- 64: Lastertaster
- 65: Lastertaster
- 66: Absetzplatte
- 67: Lager
- 68: Tragarm
- 69: Bobinenmagazin
- 70: Tragstange
- 71: Tragplatte
- 72: Vorsprung
- 73: Zahnriemen
- 74: Führungsstange

## Patentansprüche

1. Einrichtung zur Versorgung von Fertigungs- und Verpackungsmaschinen mit Verbrauchsmaterial oder Verpackungsmaterial, nämlich als Bobinen (18) gewickelten Materialbahnen, die auf Paletten (20) angeliefert und auf die Fertigungs- und Verpackungsmaschinen verteilt werden, mit folgenden Merkmalen:
a) einer Maschine oder einer Einheit aus mehreren Maschinen, insbesondere bestehend aus zwei Linien (10, 11) für die Fertigung und Verpackung von Zigaretten, ist ein benachbartes Zwischenlager (12) für Verpackungsmaterial bzw. Bobinen (18) zugeordnet,
b) im Zwischenlager (12) befindet sich mindestens eine Palette (20) mit Bobinen (18) für in der Maschine oder in den Maschinen zu verarbeitendes Material,
c) Paletten (20) mit jeweils einer Art von Bobinen (18) sind durch einen Palettenförderer (28) dem Zwischenlager (12) zuführbar,
d) einzelne Bobinen (18) sind durch einen gesonderten Bobinenförderer (48) aus dem Zwischenlager (12) zu einer der zu versorgenden Maschinen transportierbar, **gekennzeichnet durch** folgende Merkmale
e) im Bereich des Zwischenlagers (12) oder unmittelbar benachbart zu diesem ist eine Umschlagstation (25) gebildet, in deren Bereich der Palettenförderer (28) zur Zuführung von Paletten (20) zum Zwischenlager (12) und der Bobinenförderer (48) zum Transport der Bobinen (18) verläuft,
f) der Palettenförderer (28) und der Bobinenförderer (48) sind als Überkopfförderer ausgebildet.

2. Einrichtung nach Anspruch 1, **dadurch gekennzeichnet, dass** die Paletten (20) im Bereich des Zwischenlagers (12) durch einen gesonderten Förderer transportierbar sind, nämlich durch einen Palettenwagen (26), auf dem die ankommenden, mit Bobinen (18) beladenen Paletten (20) durch den Palettenförderer (28) im Bereich der Umschlagstation (25) absetzbar sind.

3. Einrichtung nach Anspruch 1 oder 2, **dadurch gekennzeichnet, dass** Bobinen (18) zur Übernahme durch den Bobinenförderer (48) im Bereich des Zwischenlagers (12) durch einen gesonderten Förderer transportierbar sind, insbesondere durch einen Portalroboter (39), der oberhalb der im Bereich des Zwischenlagers (12) positionierten Paletten (20) mit Bobinen (18) bewegbar ist und einen selbsttätig steuerbaren Hubkopf (47) für Bobinen (18) aufweist.

4. Einrichtung nach Anspruch 1 oder einem der weiteren Ansprüche, **dadurch gekennzeichnet, dass** Bobinen (18) zur Übernahme durch den Bobinenförderer (48) durch den dem Zwischenlager (12) zugeordneten Förderer, insbesondere durch den Portalroboter (39), auf einer exakt definierten Position in der Bewegungsbahn des Bobinenförderers (48) absetzbar sind, derart, dass die bereitgehaltene Bobine (18) durch den Bobinenförderer (48) mit geringen Steuerungsmaßnahmen aufnehmbar ist.

5. Einrichtung nach Anspruch 4 oder einem der weiteren Ansprüche, **dadurch gekennzeichnet, dass** Bobinen (18) zur Übernahme durch den Bobinenförderer (48) von dem Portalroboter (39) auf einem Übergabeförderer bzw. Zwischenförderer (59) absetzbar und durch diesen dem Bobinenförderer (48) zuführbar sind, insbesondere zur Übernahme der Bobine (18) im Bereich der Umschlagstation (25).

6. Einrichtung nach Anspruch 4 oder 5, **dadurch gekennzeichnet, dass** die auf den Bobinenförderer (48) ausgerichtete Ablage für Bobinen (18) aus einer Tragplatte (71) besteht mit einer Zentrierung für die Bobine (18), insbesondere mit einem in die Mittenöffnung (19) der Bobine (18) eintretenden Vorsprung (72).

7. Einrichtung nach Anspruch 1 oder einem der weiteren Ansprüche, **dadurch gekennzeichnet, dass** der Bobinenförderer (48) ein an einer erhöht angeordneten Laufschiene (49) verfahrbares Laufwerk (50) aufweist, an dem ein mittels Hubseil (51) auf- und abbewegbarer Bobinenträger (53) zur Aufnahme mindestens einer einzelnen Bobine (18) angeordnet ist.

8. Einrichtung nach Anspruch 1, **dadurch gekennzeichnet, dass** Palettenförderer (28) und Bobirienförderer (48) durch die gemeinsame Umschlagstation (25) des Zwischenlagers (12) hindurchlaufen, und zwar mit parallelen Bewegungsbahnen, wobei der Bobinenförderer (48) mit einem zwei Förderabschnitte (55, 56) miteinander verbindenden Querabschnitt (58) durch den Bereich der Umschlagstation (25) hindurchgeführt ist.

9. Einrichtung nach Anspruch 1 oder einem der weiteren Ansprüche, **dadurch gekennzeichnet, dass** die Paletten (20) im Zwischenlager (12) auf ortsfesten Ablagen (21) positioniert sind, vorzugsweise in zwei Reihen zu beiden Seiten einer mittigen Bewegungsbahn eines Palettenwagens (26) zum Transport von Paletten (20) zwischen Umschlagstation (25) und zugeordneter Ablage (21).

10. Einrichtung nach Anspruch 9 oder einem der weiteren Ansprüche, **dadurch gekennzeichnet, dass** ankommende Paletten (20) von dem Palettenförderer (28) auf den Palettenwagen (26) im Bereich der Umschlagstation (25) absetzbar und von dem Palettenwagen (26) den Ablagen (21) zuführbar sind.

11. Einrichtung nach Anspruch 9 oder einem der weiteren Ansprüche, **dadurch gekennzeichnet, dass** der Palettenwagen (26) eine Querfördereinrichtung aufweist zum Überführen von Paletten (20) auf Ablagen (21).

## Claims

1. An arrangement for supplying production and packaging machines with expendable material or packaging material, namely as material webs that are wound as reels (18), supplied on pallets (20) and distributed to the production and packaging machines, with the following features:
a) a machine or a unit containing a plurality of machines, in particular comprising two lines (10, 11) for producing and packaging cigarettes, is assigned an adjacent intermediate store (12) for packaging material or reels (18),
b) located in the intermediate store (12) is at least one pallet (20) with reels (18) for the material to be processed in the machine or machines,
c) pallets (20) with in each case one type of reel (18) can be fed to the intermediate store (12) by a pallet conveyor (28),
d) individual reels (18) can be transported, by a separate reel conveyor (48), from the intermediate store (12) to one of the machines that is to be supplied, **characterized by** the following features:
e) formed in the region of the intermediate store (12), or directly adjacent same, is a transfer station (25), in the region of which the pallet conveyor (28) for feeding pallets (20) to the intermediate store (12) and the reel conveyor (48) for transporting the reels (18) run,
f) the pallet conveyor (28) and the reel conveyor (48) are designed as overhead conveyors.

2. The arrangement according to Claim 1, **characterized in that** the pallets (20) can be transported in the region of the store (12) by a separate conveyor, namely by pallet carriage (26), onto which the arriving pallets (20) loaded with reels (18) can be set down by means of the pallet conveyor (28) in the region of the transfer station (25).

3. The arrangement according to Claim 1 or 2, **characterized in that**, in order to be received by the reel conveyor (48), it is possible to transport reels (18) in the region of the intermediate store (12) by a separate conveyor, in particular by a portal robot (39), which can be moved above the pallets (20) with reels (18) positioned in the region of the intermediate store (12) and which has an automatically controllable lifting head (47) for reels (18).

4. The arrangement according to Claim 1 or one of the further Claims, **characterized in that**, in order to be received by the reel conveyor (48), reels (18) can be set down by the conveyor assigned to the intermediate store (12), in particular by the portal robot (39), at a precisely defined position in the movement path of the reel conveyor (48) such that the reel (18) provided can be received by the reel conveyor (48) with minor control measures being taken.

5. The arrangement according to Claim 4 or one of the further Claims, **characterized in that**, in order to be received by the reel conveyor (48), reels (18) can be set down by the portal robot (39) on a transfer conveyor or intermediate conveyor (59) and fed to the reel conveyor (48) by said conveyor, in particular for the purpose of receiving the reel (18) in the region of the transfer station (25).

6. The arrangement according to Claim 4 or 5, **characterized in that** the receiving means for reels (18) intended for the reel conveyor (48) comprises a load-bearing panel (71) having a centring device for the reel (18), in particular with a protrusion (72) passing into the central opening (19) of the reel (18).

7. The arrangement according to Claim 1 or one of the further Claims, **characterized in that** the reel conveyor (48) has a travelling mechanism (50), which can be displaced on a elevated running rail (49) and on which is arranged a reel carrier (53) that can be moved up and down by a lifting cable (51) for the purpose of receiving at least a single reel (18).

8. The arrangement according to Claim 1, **characterized in that** pallet conveyor (28) and reel conveyor (48) run through the common transfer station (25) of the intermediate store (12), specifically with parallel paths of movement, with the reel conveyor (48) being conveyed through the region of the transfer station (25) by means of a transverse section (58) that connects two conveying sections (55, 56) with each other.

9. The arrangement according to Claim 1 or one of the further Claims, **characterized in that** the pallets (20) in the intermediate store (12) are positioned on stationary rests (21), preferably in two rows on both sides of a central movement path of a pallet carriage (26) for transporting pallets (20) between the transfer station (25) and associated rest (21).

10. The arrangement according to Claim 9 or one of the further Claims, **characterized in that** the arriving pallets (20) can be set down by the pallet conveyor (28) onto the pallet carriage (26) in the region of the transfer station (25) and can be fed by the pallet carriage (26) to the rests (21).

11. The arrangement according to Claim 9 or one of the further Claims, **characterized in that** the pallet carriage (26) is equipped with a transverse conveying apparatus for transferring pallets (20) to rests (21).

## Revendications

1. Dispositif pour alimenter des machines de fabrication et d'emballage en matériau de consommation ou en matériau d'emballage, à savoir en bandes de matériau enroulées sous forme de bobines (18), qui sont fournies sur des palettes (20) et qui sont distribuées aux machines de fabrication et d'emballage, comprenant les caractéristiques suivantes :
a) on associe à une machine ou à une unité constituée de plusieurs machines, notamment constituée de deux lignes (10, 11) pour la fabrication et l'emballage de cigarettes, un poste de stockage intermédiaire (12) voisin, pour le matériau d'emballage ou les bobines (18),
b) dans le poste de stockage intermédiaire (12) se trouve au moins une palette (20) avec des bobines (18) pour le matériau à traiter dans la machine ou dans les machines,
c) des palettes (20), comprenant à chaque fois un type de bobines (18), peuvent être acheminées par un transporteur de palettes (28) au poste de stockage intermédiaire (12),
d) des bobines individuelles (18) peuvent être transportées par un transporteur de bobines séparé (48) depuis le poste de stockage intermédiaire (12) à l'une des machines à alimenter,
**caractérisé par** les caractéristiques suivantes:
e) dans la région du poste de stockage intermédiaire (12) ou directement à proximité de celui-ci est formé un poste de transbordement (25), dans la région duquel s'étendent le transporteur de palettes (28) pour l'acheminement des palettes (20) au poste de stockage intermédiaire (12) et le transporteur de bobines (48) pour le transport des bobines (18),
f) le transporteur de palettes (28) et le transporteur de bobines (18) sont réalisés sous forme de transporteurs aériens.

2. Dispositif selon la revendication 1, **caractérisé en ce que** les palettes (20) peuvent être transportées dans la région du poste de stockage intermédiaire (12) par un transporteur séparé, à savoir par un chariot de palettes (26), sur lequel les palettes (20) arrivant, chargées de bobines (18), peuvent être déposées par le transporteur de palettes (28) dans la région du poste de transbordement (25).

3. Dispositif selon la revendication 1 ou 2, **caractérisé en ce que** des bobines (18) peuvent être transportées par un transporteur séparé pour le transfert par le transporteur de bobines (48) dans la région du poste de stockage intermédiaire (12), notamment par un robot de portique (39) qui peut être déplacé avec les bobines (18) au-dessus des palettes (20) positionnées dans la région du poste de stockage intermédiaire (12) et qui présente une tête de levage (47) pour les bobines (18), pouvant être commandée automatiquement.

4. Dispositif selon la revendication 1 ou l'une quelconque des autres revendications, **caractérisé en ce que** des bobines (18) peuvent, pour le transfert par le transporteur de bobines (48), être déposées en une position exactement définie dans la voie de déplacement du transporteur de bobines (48) par le transporteur associé au poste de stockage intermédiaire (12), notamment par le robot de portique (39), de telle sorte que la bobine (18) maintenue prête puisse être reçue par le transporteur de bobines (48) avec peu d'efforts de commande.

5. Dispositif selon la revendication 4 ou l'une quelconque des autres revendications, **caractérisé en ce que** des bobines (18) peuvent, pour le transfert par le transporteur de bobines (48), être déposées par le robot de portique (39) sur un transporteur de transfert ou un transporteur intermédiaire (59) et être acheminées par celui-ci au transporteur de bobines (48), notamment pour le transfert de la bobine (18) dans la région du poste de transbordement (25).

6. Dispositif selon la revendication 4 ou 5, **caractérisé en ce que** le support de dépose pour les bobines (18) aligné avec le transporteur de bobines (48) se compose d'une plaque porteuse (71) avec un centrage pour la bobine (18), notamment avec une saillie (72) entrant dans l'ouverture centrale (19) de la bobine (18).

7. Dispositif selon la revendication 1 ou l'une quelconque des autres revendications, **caractérisé en ce que** le transporteur de bobines (48) présente un mécanisme de roulement (50) déplaçable sur un rail de roulement (49) disposé de manière surélevée, sur lequel mécanisme de roulement un support de bobines (53) pouvant être déplacé de haut en bas au moyen d'un câble de levage (51) est disposé pour recevoir au moins une bobine individuelle (18).

8. Dispositif selon la revendication 1, **caractérisé en ce que** le transporteur de palettes (28) et le transporteur de bobines (48) passent à travers l'ensemble du poste de transbordement (25) du poste de stockage intermédiaire (12), et ce avec des trajectoires de déplacement parallèles, le transporteur de bobines (48) étant guidé à travers la région du poste de transbordement (25) avec une portion transversale (58) reliant ensemble deux portions de transport (55, 56).

9. Dispositif selon la revendication 1 ou l'une quelconque des autres revendications, **caractérisé en ce que** les palettes (20) sont positionnées dans le poste de stockage intermédiaire (12) sur des supports de dépose fixes (21), de préférence en deux rangées des deux côtés d'une trajectoire de déplacement centrale d'un chariot de palettes (26) pour le transport de palettes (20) entre le poste de transbordement (25) et le support de dépose associé (21).

10. Dispositif selon la revendication 9 ou l'une quelconque des autres revendications, **caractérisé en ce que** les palettes (20) arrivant peuvent être déposées par le transporteur de palettes (28) sur le chariot de palettes (26) dans la région du poste de transbordement (25) et peuvent être acheminées par le chariot de palettes (26) aux supports de dépose (21).

11. Dispositif selon la revendication 9 ou l'une quelconque des autres revendications, **caractérisé en ce que** le chariot de palettes (26) présente un dispositif de transport transversal pour le transfert de palettes (20) sur des supports de dépose (21).
